# EUROPEAN PATENT APPLICATION

(11) **EP 4 411 956 A1**
(43) Date of publication of application: **07.08.2024**
(21) Application number: 22876364.5
(22) Date of filing: 28.09.2022
(51) Int. Cl.: H01M 50/342, H01G 11/10, H01G 11/14, H01G 11/78, H01M 50/213, H01M 50/317, H01M 50/367, H01M 50/503, H01M 50/505, H01M 50/545, H01M 50/588, H01M 50/593

(54) **ELECTRIC POWER STORAGE MODULE**

(30) Priority: 30.09.2021 JP 2021160926
(71) Applicant: Panasonic Intellectual Property Management Co., Ltd., Kadoma-shi, Osaka 571-0057 (JP)
(72) Inventor: HIRANO, Tatsuya, Kadoma-shi, Osaka 571-0057 (JP); TAKASAKI, Hiroshi, Kadoma-shi, Osaka 571-0057 (JP)
(74) Representative: Novagraaf International SA
(86) International application number: PCT/JP2022/036231
(87) International publication number: WO 2023/054498

(57) **Abstract**

At least one electric power storage device that is cylindrical, an upper holder holding the at least one electric power storage device, an insulating plate provided above the upper holder are included. An exhaust valve is provided on the upper end part of the electric power storage device, the upper holder includes an opening part for exposing the exhaust valve, the insulating plate includes a flat plate-shaped main body part, an opening part formed on the main body part and communicating with the opening part, a lid part closing a part of the opening part, and a connecting part that connects the lid part to the main body part. The main body part includes a fixation part for fixing the insulating plate and the upper holder.

## Description

### Technical Field

The present disclosure relates to an electric power storage module.

### Background Art

An electric power storage module includes at least one cylindrical electric power storage device and an exhaust duct for releasing gas discharged from the inside of the electric power storage device to the outside of the electric power storage module when the electric power storage device is in an abnormal state.

An electric power storage module disclosed in PTL1 includes a flat plate (hereinafter, referred to as an insulating plate) that partitions an exhaust duct above a holder for holding the upper part of the electric power storage device. The insulating plate includes an open valve that opens only toward the exhaust duct. Thus, the opening valve is opened by pressure of gas discharged from the inside of the electric power storage device when the electric power storage device is in an abnormal state, and the gas flows into the exhaust duct and is exhausted to the outside of the electric power storage module.

### Citation List

### Patent Literature

[PTL 1] PCT International Publication WO2012/017586

### SUMMARY OF THE INVENTION

The electric power storage module of PTL1 can improve reliability. However, the electric power storage modules are required to be more improved in reliability.

An object of the present disclosure is to provide an electric power storage module that is excellent in reliability.

An electric power storage module of one aspect of the present disclosure includes at least one electric power storage device that is cylindrical; holders each holding the at least one electric power storage device; and an insulating plate provided at one end of each of the holders, the at least one electric power storage device including an exhaust valve at an end, one of the holders including a first opening part for exposing the exhaust valve, the insulating plate including a main body part that is flat plate-shaped, a second opening part formed on the main body part and communicating with the holder opening part, a lid part closing a part of the insulating plate opening part, and a connecting part that connects the lid part to the main body part, and the main body part including a fixation part for fixing the insulating plate and the holder.

According to the aspect of the present disclosure, reliability of the electric power storage module is improved.

### BRIEF DESCRIPTION OF THE DRAWINGS

FIG. 1 is a side sectional view showing an electric power storage module in accordance with an exemplary embodiment of the present disclosure.
FIG. 2 is a detailed view showing a part A of FIG. 1.
FIG. 3 is a plan view showing an insulating plate.
FIG. 4 is a perspective view showing a part of the insulating plate.
FIG. 5 is a plan view showing an insulating plate in accordance with another exemplary embodiment.
FIG. 6 is a plan view showing an insulating plate in accordance with still another exemplary embodiment.
FIG. 7 is a plan view showing an insulating plate in accordance with yet another exemplary embodiment.
FIG. 8 is a plan view showing an insulating plate in accordance with a further exemplary embodiment.
FIG. 9 is a plan view showing an insulating plate in accordance with a still further exemplary embodiment.

### DESCRIPTION OF EMBODIMENT

Hereinafter, exemplary embodiments of the present disclosure are described with reference to drawings. The shapes, materials, and numbers described below are examples, and can be appropriately modified in accordance with specifications of electric power storage modules.

### "Electric power storage module"

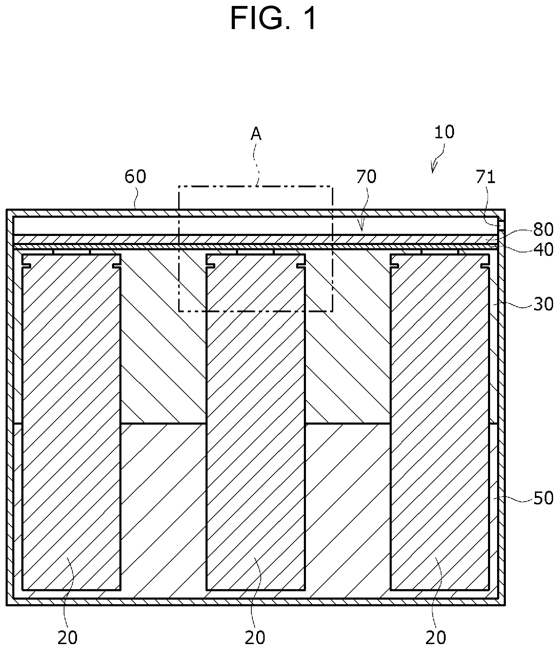

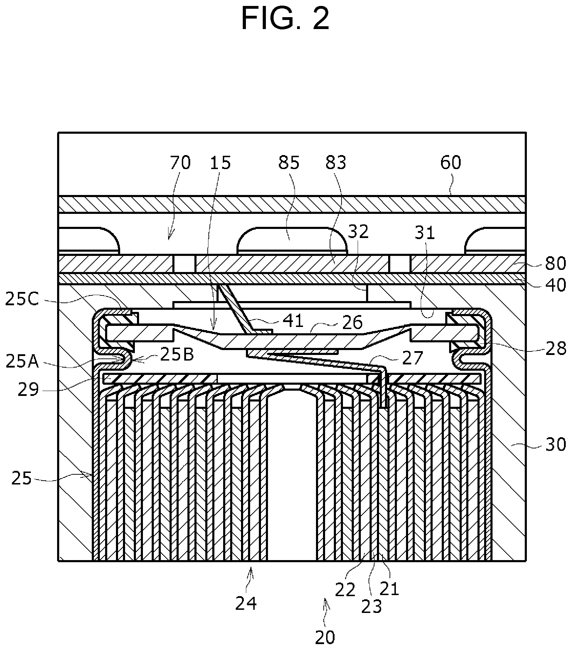

Electric power storage module 10 of an exemplary embodiment is described with reference to FIGs. 1 and 2.

Electric power storage module 10 is used mainly as a power source for power. Electric power storage module 10 is used as power sources for devices such as an electric vehicle, an electric tool, an electric assisted bicycle, an electric motorcycle, an electric wheelchair, an electric tricycle, and an electric cart, driven by a motor. However, the applications of electric power storage module 10 are not limited, and electric power storage module 10 may be used as power sources for a variety of electric devices, for example, cleaners, radios, lighting devices, digital cameras, video cameras, and the like, used indoors and outdoors.

In FIG. 1, electric power storage module 10 includes a plurality of cylindrical electric power storage devices 20, upper holder 30 as a holder for holding closer to the upper ends of the plurality of cylindrical electric power storage devices 20, current collecting member 40 for collecting electricity from a first terminal (positive electrode terminal) and a second terminal (negative electrode terminal) of each of electric power storage devices 20, and lower holder 50 for holding closer to the lower ends of the plurality of electric power storage devices 20.

Furthermore, electric power storage module 10 further includes case 60 as an enclosure housing electric power storage devices 20, upper holder 30, current collecting member 40, and lower holder 50, exhaust duct 70 located in the upper part of the inside of case 60 and communicating with the outside of case 60, and insulating plate 80 partitioning below exhaust duct 70 and insulating exhaust duct 70 and electric power storage device 20 from each other.

### "Electric power storage device"

For electric power storage device 20, a cylindrical lithium ion secondary battery is used. Electric power storage device 20 is not limited to a lithium ion secondary battery, and may be a nickel hydrogen battery, a capacitor, and the like.

In FIG. 2, although details are described later, electric power storage device 20 includes a positive electrode terminal as a first terminal and a negative electrode terminal as a second terminal in an upper end part. More specifically, the positive electrode terminal is disposed on a top surface of sealing body 26 mentioned later. Furthermore, the negative electrode terminal is disposed on a caulked opening end part (hereinafter, referred to as shoulder part 25C) of outer covering can 25.

The plurality of electric power storage devices 20 may be closest-packed in electric power storage module 10 in consideration of safety, and neighboring electric power storage devices 20 may be arranged substantially adjacent to each other. Electric power storage devices 20 are arranged such that, for example, six electric power storage devices 20 surround the periphery of one electric power storage device 20 in a plan view (hereinafter, referred to as staggered arrangement).

Electric power storage device 20 includes electrode group 24 including, for example, belt-like positive electrode 21 and belt-like negative electrode 22 wound with belt-like separator 23 sandwiched between positive electrode 21 and negative electrode 22; cylindrical outer covering can 25 housing electrode group 24 together with an electrolytic solution, sealing body 26 sealing an opening of outer covering can 25 in an insulated state, foil-shaped positive electrode tab 27 for electrically connecting positive electrode 21 and sealing body 26 to each other, a negative electrode tab (not shown) for electrically connecting negative electrode 22 and outer covering can 25 to each other. Insulating gasket 28 is disposed between the outer periphery of sealing body 26 and an inner peripheral surface of the opening of outer covering can 25.

Annular groove 25A is formed on an outer peripheral surface of outer covering can 25 near to the opening. Annular protrusion 25B is formed on the inner peripheral surface of corresponding outer covering can 25 of groove 25A. Gasket 28 and sealing body 26 are disposed on annular protrusion 25B inside outer covering can 25. Furthermore, shoulder part 25C of outer covering can 25 is caulked to fall outer covering can 25 inward with gasket 28 disposed on the inner peripheral side. When sealing body 26 is sandwiched in the up-down direction between caulked shoulder part 25C and protrusion 25B via gasket 28, the opening of outer covering can 25 is sealed. Note here that exhaust valve 15 may be formed on the bottom part of outer covering can 25. In this case, the opening part is formed in lower holder 50 supporting closer to the bottom of outer covering can 25, and the insulating plate is disposed in the outer bottom part of lower holder 50.

Sealing body 26 may include a current interrupt device (CID) or exhaust valve 15 (not shown) that ruptures when the pressure inside outer covering can 25 reaches a predetermined pressure or more. Furthermore, insulating member 29 for insulating electrode group 24 from outer covering can 25 may be provided between electrode group 24 and protrusion 25B. When insulating member 29 is provided, positive electrode tab 27 may extend through a through hole formed in insulating member 29. Furthermore, an insulating member for insulating electrode group 24 from outer covering can 25 may be provided between electrode group 24 and a bottom part of outer covering can 25. The negative electrode tab may pass through the through hole formed in the insulating member or extend by bypassing the insulating member.

In electric power storage device 20, as described above, the top surface of sealing body 26 is provided with the positive electrode terminal to which positive electrode lead 41 of current collecting member 40 is joined. Furthermore, in electric power storage device 20, as described above, the negative electrode terminal is formed to caulked shoulder part 25C of outer covering can 25, and the negative electrode lead (not shown) of current collecting member 40 is joined to shoulder part 25C of outer covering can 25 inward in the radial direction of electric power storage device 20.

### "Upper holder"

Upper holder 30 is a member for holding upper end sides of a plurality of electric power storage devices 20. Upper holder 30 is formed of a thermoplastic resin. Thermoplastic resins are broadly divided into general purpose plastics and engineering plastics, and include polyethylene, polypropylene, polyamide, ABS, and the like.

FIG. 2 shows that a plurality of housing parts 31 each housing a corresponding upper end side of each electric power storage device 20 is formed on a bottom surface of upper holder 30. When the upper end side of each electric power storage device 20 is fitted into a corresponding housing part 31, the upper end sides of electric power storage devices 20 are held in upper holder 30.

Opening part 32 (first opening part) opening in a circular shape is formed in a ceiling part of housing part 31. With opening part 32, the top surface of sealing body 26 of electric power storage device 20 is exposed from the upper surface of upper holder 30. Accordingly, the top surface of sealing body 26 and positive electrode lead 41 can be jointed to each other via opening part 32. When electric power storage device 20 is in an abnormal state, high-temperature gas or high-temperature electrically conductive ejected matter discharged from exhaust valve 15 of electric power storage device 20 can be released above upper holder 30. The shape of opening part 32 is not limited to a circle. The shape may be oval, oblong, or polygonal such as rectangular.

### "Current collecting member"

In FIG. 2, current collecting member 40 is formed of a plate-shaped metal material (metal foil) and is provided on the top surface of upper holder 30. Current collecting member 40 includes a base and an opening part (a third opening part) formed in the base, positive electrode lead 41 extending from an inner peripheral edge of the opening part and connected to the positive electrode terminal of electric power storage device 20, and a negative electrode lead (not shown) connected to the negative electrode terminal of electric power storage device 20. Note here that current collecting member 40 may not include an opening part. Positive electrode lead 41 or the negative electrode lead may extend from the outer edge of current collecting member 40. In current collecting member 40, a current collecting member connected to the positive electrode terminal of electric power storage device 20 and a current collecting member connected to the negative electrode terminal of electric power storage device 20 may be disposed on the top surface of upper holder 30, the current collecting plate connected to one terminal may be provided on the outer bottom surface of lower holder 50. In this case, lower holder 50 may include an opening part for exposing electric power storage device 20 from the housing part of electric power storage device 20. One electrode lead may be inserted from the opening part of lower holder 50.

### "Lower holder"

In FIG. 1, lower holder 50 is a member holding the lower end sides of a plurality of electric power storage devices 20. Lower holder 50 is formed of a thermoplastic resin. Thermoplastic resins are broadly divided into general purpose plastics and engineering plastics, and include polyethylene, polypropylene, polyamide, ABS, and the like.

### "Case"

In FIGs. 1 and 2, case 60 houses electric power storage device 20, upper holder 30, current collecting member 40, and lower holder 50. Exhaust duct 70 described later is partitioned in the upper part of case 60.

### "Exhaust duct"

In FIGs. 1 and 2, exhaust duct 70 exhausts gas in electric power storage device 20 to the outside of case 60 when electric power storage device 20 is in an abnormal state. Exhaust duct 70 is a duct formed of insulating plate 80 mentioned later and case 60 located above insulating plate 80. Exhaust duct 70 includes exhaust port 71 communicating with the outside of case 60. In electric power storage module 10 of the present disclosure, case 60 or exhaust duct 70 is not essential.

### "Insulating plate"

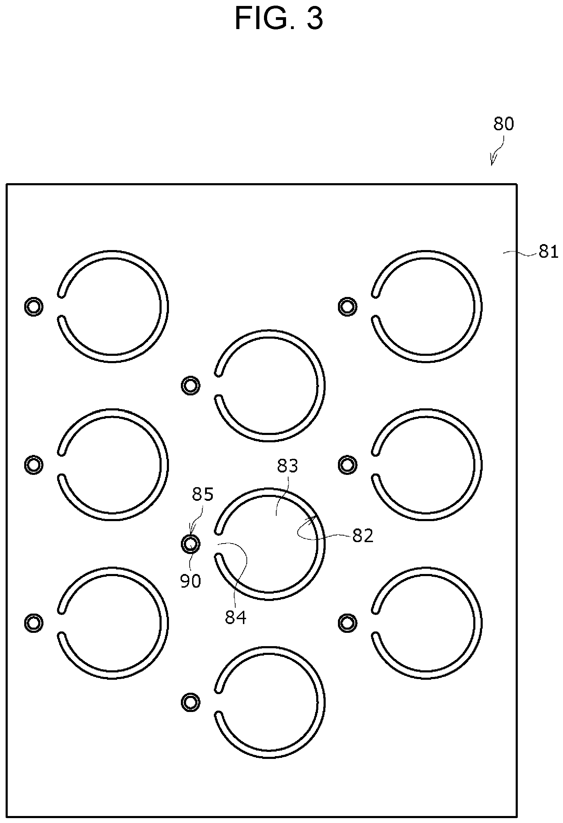

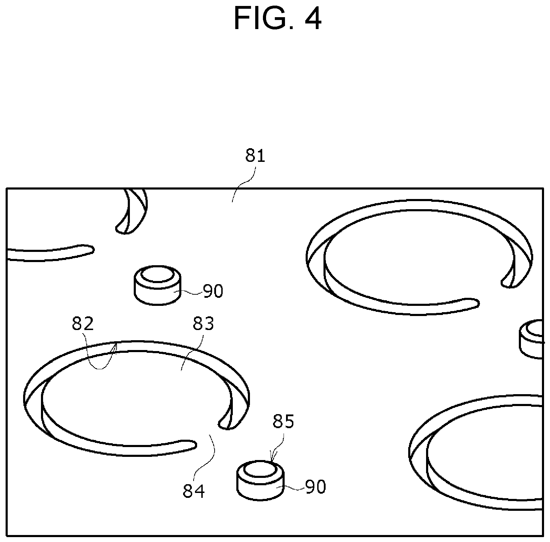

Insulating plate 80 is described in detail with reference to FIGs. 2 to 4.

Insulating plate 80 partitions exhaust duct 70 and insulates exhaust duct 70 from electric power storage device 20. Insulating plate 80 is formed of mica, glass epoxy, and flame-retardant fiber.

Insulating plate 80 includes flat plate-shaped main body part 81, opening part 82 formed on main body part 81 and communicating with opening part 32, lid part 83 closing a part of opening part 82, and connecting part 84 connecting lid part 83 and main body part 81. Furthermore, in the vicinity of connecting part 84 of main body part 81, fixation part 85 for fixing insulating plate 80 and upper holder 30 to each other is provided.

Main body part 81 is rectangular flat plate-shaped in a plan view, and is brought into contact with the top surface of current collecting member 40. Main body part 81 can partition exhaust duct 70 and insulate exhaust duct 70 from electric power storage device 20. Although details are described later, main body part 81 is fixed to upper holder 30 with fixation tool 90 in fixation part 85 described later.

Opening part 82 is formed in main body part 81 and formed in a circular shape communicating with opening part 32 of upper holder 30 and the opening part of current collecting member 40. A plurality of shape of opening parts 82 is arranged in staggered arrangement according to the arrangement of opening parts 32 in a plan view, in other words, according to the arrangement of electric power storage devices 20. The shape of each opening part 82 is not limited to a circular shape. The shape may be an oval shape, an oblong shape, or polygonal shapes such as a rectangular shape. The shape is preferably along the shape of opening part 32.

With opening part 82, the top surface of sealing body 26 of electric power storage device 20 is exposed from the upper surface of insulating plate 80. Therefore, when electric power storage device 20 is in an abnormal state, and when high-temperature gas or electrically conductive ejected matter (hereinafter, also referred to as exhausted matter) is discharged from the inside of electric power storage device 20, the matter exhausted can be released above insulating plate 80.

Lid part 83 closes a part of opening part 82 as mentioned above. In this example, lid part 83 is formed in a circular shape. The diameter of lid part 83 is smaller than the diameter of opening part 82. A predetermined gap is formed between the edge portion of lid part 83 and the edge portion of opening part 82.

When one of electric power storage devices 20 is in an abnormal state, lid part 83 is opened by pressure of gas discharged from the inside of the abnormal electric power storage device 20, and can allow exhausted matter discharged from the inside of the abnormal electric power storage device 20 to be released above insulating plate 80. On the other hand, when another of electric power storage devices 20 is in an abnormal state, lid part 83 can prevent exhausted matter discharged from the abnormal electric power storage device 20 in exhaust duct 70 from flowing from opening part 82 toward normal electric power storage devices 20.

Connecting part 84 connects lid part 83 and main body part 81 to each other. Connecting part 84 is formed in, for example, a strip shape, and connects the edge portion of lid part 83 and the edge portion of opening part 82 to each other. Note here that connecting part 84 is not necessarily be a strip shape. In this example, one connecting part 84 is formed to one lid part 83. When lid part 83 is opened by the pressure of the gas discharged from the inside of electric power storage device 20 when electric power storage device 20 is in an abnormal state, connecting part 84 ruptures or is plastically deformed, and the state in which lid part 83 is opened can be maintained.

Fixation part 85 fixes insulating plate 80 and upper holder 30 to each other in main body part 81. In main body part 81, fixation part 85 may be provided opposite to the side provided with lid part 83 with respect to the end part of connecting part 84 near the main body part as a boundary. When fixation part 85 overlaps with connecting part 84 in the direction in which connecting part 84 extends, insulating plate 80 can be fixed more reliably. Note here that when connecting part 84 extends toward a plurality of directions, the extending direction of connecting part 84 is the direction in which connecting part 84, which is closer to the end part of the main body part of the main body portion, extends. In this example, one fixation part 85 is provided for one connecting part 84. In fixation part 85, insulating plate 80 and upper holder 30 are fixed by fixation tool 90 described later.

Fixation part 85 can suppress floating up of insulating plate 80 from upper holder 30 by the pressure of the gas discharged from the inside of electric power storage device 20 when electric power storage device 20 is in an abnormal state. Furthermore, when lid part 83 and connecting part 84 are floating up by the pressure of the gas discharged from the inside of electric power storage device 20 when electric power storage device 20 is in an abnormal state, since main body part 81 is pulled upward via connecting part 84, by providing fixation part 85 in the vicinity of connecting part 84, insulating plate 80 can be prevented from floating from upper holder 30 more effectively.

Fixation tool 90 fixes insulating plate 80 and upper holder 30 to each other in fixation part 85. In this example, as fixation tool 90, a resin rivet is suitably used, but fixation tool 90 is not limited to this. Fastening fixation with screws, sticking fixation with an adhesive or tape, welding fixation with a thermoplastic resin, or fitting fixation by a snap fit of a resin member may be used.

When gas is discharged from one electric power storage device 20 when the one electric power storage device 20 is in an abnormal state, the gas blows out from opening part 82, and lid part 83 is lifted by the pressure of the gas. When lid part 83 is lifted, connecting part 84 ruptures or is plastically deformed. At this time, since main body part 81 is fixed to upper holder 30 by fixation part 85, main body part 81 does not float up from upper holder 30.

At the same time, high-temperature gas or high-temperature electrically conductive ejected matter discharged from the inside of one of electric power storage devices 20 can be exhausted to exhaust duct 70 and exhausted from exhaust port 71 to the outside of case 60. At this time, since opening part 82 above each of the other electric power storage devices 20 is closed by lid part 83, the high-temperature gas or the ejected matter in exhaust duct 70 can be prevented from flowing from opening part 82 to electric power storage device 20.

Insulating plate 80 can suppress floating up of insulating plate 80 from upper holder 30 by the pressure of the gas discharged from the inside of electric power storage device 20 when electric power storage device 20 is in an abnormal state. Thus, high-temperature gas or high-temperature electrically conductive ejected matter discharged from the inside of electric power storage device 20 does not get under the insulating plate 80, and the other electric power storage devices 20 do not catch fire.

### "Modified examples of Insulating plate"

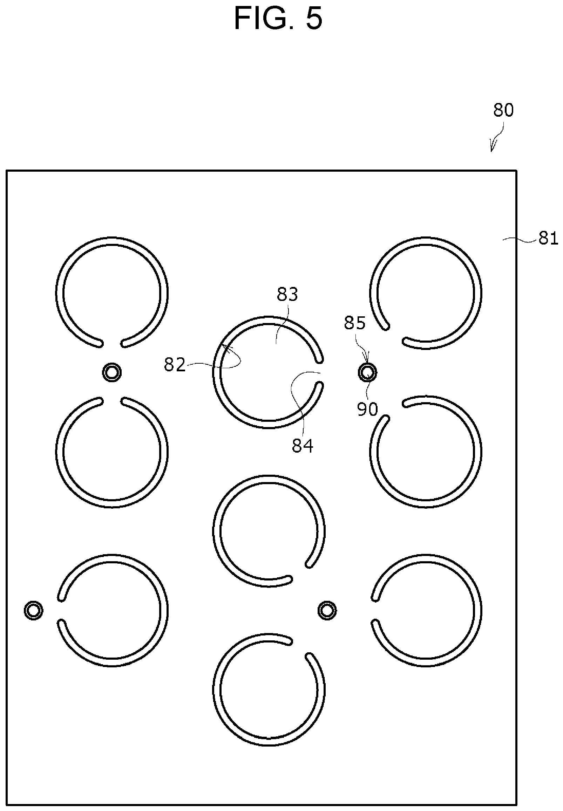

Modified examples of insulating plate 80 are described with reference to FIGs. 5 to 9. Hereinafter, the same reference numerals are given to the same elements described in the exemplary embodiment.

In FIG. 5, one fixation part 85 is provided for a plurality of connecting parts 84 in insulating plate 80. Specifically, one fixation part 85 may be provided at the tips of two connecting parts 84, and one fixation part 85 may be provided at the tips of three connecting parts 84. With such configurations, in insulating plate 80, the fixation part 85 is shared, and thereby the required fixation part 85 is reduced, and miniaturization of insulating plate 80 and electric power storage module 10 can be expected.

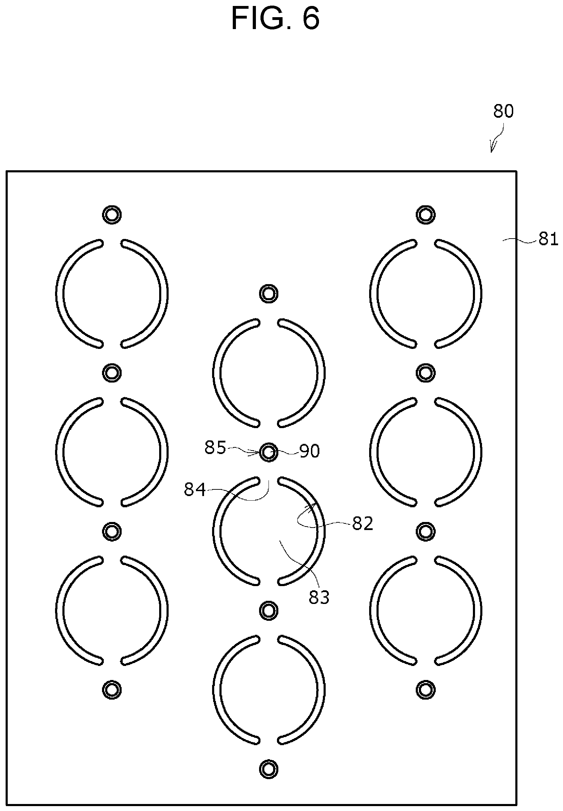

In FIG. 6, a plurality of connecting parts 84 is formed with respect to lid part 83 in insulating plate 80. Specifically, two connecting parts 84 are formed with respect to one lid part 83, but three connecting parts 84 may be formed with respect to lid part 83. In this way, when a plurality of connecting parts 84 is formed with respect to one lid part 83, when abnormal electric power storage device 20 discharges exhausted matter, a part of the plurality of connecting parts 84 ruptures by pressure of high-temperature gas, or exhausted matter may be discharged to exhaust duct 70 by extension of lid part 83 or connecting part 84 depending on materials of insulating plate 80. With this configuration, when abnormal electric power storage device 20 is not present, or when abnormal electric power storage device 20 occurs, normal electric power storage device 20 can be protected by lid part 83 reliably.

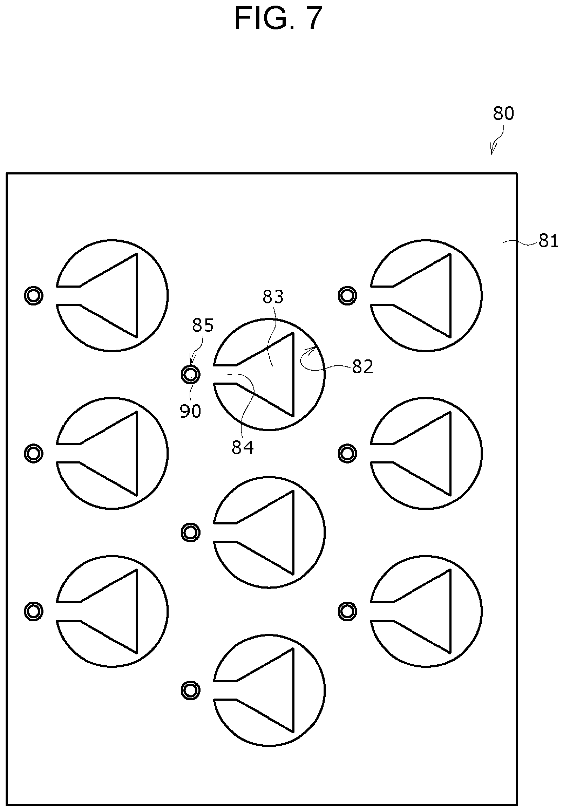

In FIG. 7, lid part 83 is formed in a triangular shape in insulating plate 80 and partially closes opening part 82.

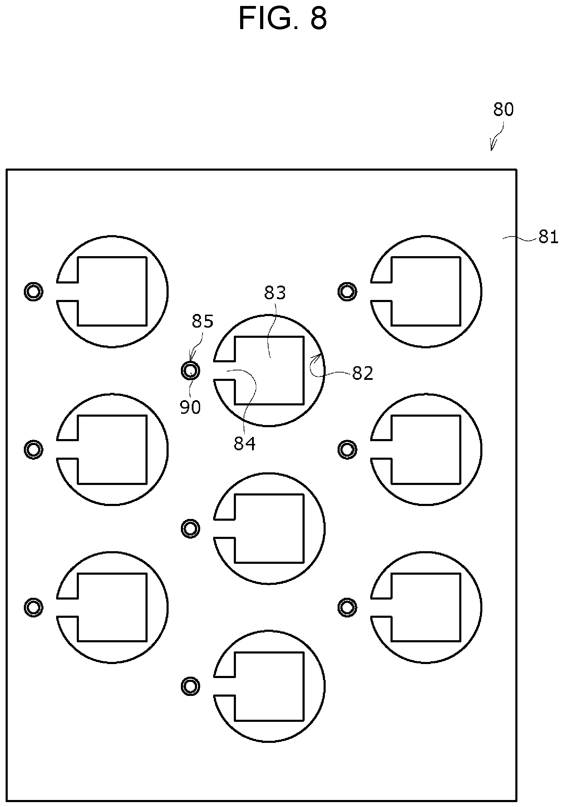

In FIG. 8, lid part 83 is formed in a rectangular shape in insulating plate 80 and partially closes opening part 82.

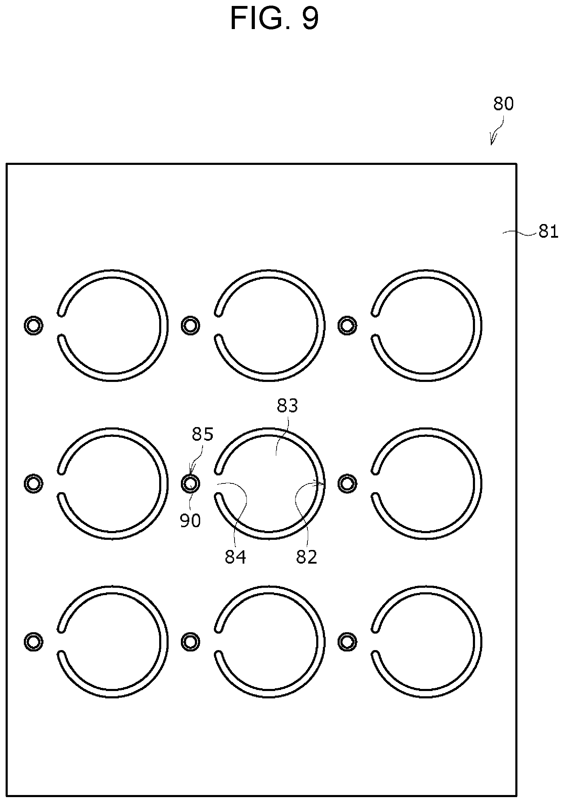

In FIG. 9, a plurality of electric power storage devices 20 is arranged in an aligned state of electric power storage devices in a plan view (hereinafter referred to as aligned arrangement). In insulating plate 80, opening parts 82 are arranged in alignment according to the arrangement of opening parts 32 in a plan view, in other words, the arrangement of electric power storage device 20.

Note here that the present invention is not limited to the above-described exemplary embodiments and modified examples, and various modifications and improvements can be made within the scope of matters described in the claims of the present application.

In the present embodiment, an example in which exhaust valves 15 of plurality of electric power storage devices 20 are arranged facing the same direction in electric power storage devices 20 has been described, but electric power storage module 10 of the present disclosure is not limited to this configuration. For example, among the plurality of electric power storage devices 20, some electric power storage devices 20 may include exhaust valves 15 facing the upper holder side, and the remaining electric power storage devices 20 may include exhaust valves 15 facing the lower holder side. In this case, in electric power storage module 10, insulating plates may be arranged on both sides of the upper holder and the lower holder.

### REFERENCE MARKS IN THE DRAWINGS

10 electric power storage module, 15 exhaust valve, 20 electric power storage device, 21 positive electrode (first electrode), 22 negative electrode (second electrode), 23 separator, 24 electrode group, 25 outer covering can, 25A groove, 25B protrusion, 25C shoulder part, 26 sealing body, 27 positive electrode tab, 28 gasket, 29 insulating member, 30 upper holder, 31 housing part, 32 opening part (first opening part), 40 current collecting member, 41 positive electrode lead, 50 lower holder, 60 case, 70 exhaust duct, 71 exhaust port, 80 insulating plate, 81 main body part, 82 plate opening part (second opening part), 83 lid part, 84 connecting part, 85 fixation part, 90 fixation tool.

## Claims

1. An electric power storage module comprising:
at least one electric power storage device that is cylindrical;
a holder holding the at least one electric power storage device; and
an insulating plate provided at one end of the holder,
the at least one electric power storage device each including an exhaust valve at an end part of the at least one electric power storage device,
the holder including at least one first opening part each exposing the exhaust valve of a corresponding one of the at least one electric power storage device,
the insulating plate including:
a main body part that is flat plate-shaped;
at least one second opening part disposed on the main body part and each communicating with a corresponding one of the at least one first opening part;
at least one lid part each closing a part of a corresponding one of the at least one second opening part; and
at least one connecting part each connecting a corresponding one of the at least one lid part to the main body part, and
the main body part including at least one fixation part for fixing the insulating plate and the holder.

2. The electric power storage module according to claim 1, further comprising:
an enclosure housing the at least one electric power storage device, the holder, and the insulating plate; and
an exhaust duct partitioned by the insulating plate at one end in the enclosure, and communicating with outside of the enclosure.

3. The electric power storage module according to claim 1 or claim 2, wherein the fixation part is disposed at a side opposite to a side provided with the lid part with respect to a connecting section to the connecting part as a boundary.

4. The electric power storage module according to any one of claim 1 to claim 3, wherein the fixation part overlaps with the connecting part in a direction in which the connecting part extends.

5. The electric power storage module according to any one of claims 1 to 4, wherein the connecting part is in a strip shape.

6. The electric power storage module according to any one of claim 1 to claim 5, wherein the insulating plate includes a plurality of connecting parts with respect to one of the at least one lid part, the plurality of connecting parts including the connecting part.

7. The electric power storage module according to any one of claim 1 to claim 6, comprising a plurality of the electric power storage devices,
wherein one of the at least one fixation part is provided with respect to a plurality of connecting parts that are adjacent to each other, the plurality of connecting parts including the connecting part.

8. The electric power storage module according to any one of claim 1 to claim 7, wherein the at least one lid part is in a circular shape, a triangular shape, or a rectangular shape.

9. The electric power storage module according to any one of claim 1 to claim 8, wherein the at least one electric power storage device includes an electrode group including a first electrode and a second electrode, an outer covering can housing the electrode group, and a sealing body sealing an opening of the outer covering can together with a gasket, the first electrode is electrically connected to the sealing body, and the second electrode is electrically connected to the outer covering can.

10. The electric power storage module according to claim 9, wherein the exhaust valve is provided to the sealing body.

11. The electric power storage module according to claim 9 or claim 10, further comprising a current collecting member for electrically connecting the at least one of electric power storage devices, between the holder and the insulating plate,
wherein the current collecting member includes a base, a third opening part disposed on the base and overlapping with the first opening part and the second opening part, and a lead part extending from an inner edge of the third opening part and electrically connected to the sealing body or the outer covering can.
